# EUROPÄISCHE PATENTSCHRIFT

(11) **EP 0 591 465 B1**
(45) Veröffentlichungstag und Bekanntmachung des Hinweises auf die Patenterteilung: **12.03.1997**
(21) Anmeldenummer: 92916189.1
(22) Anmeldetag: 05.06.1992
(51) Int. Cl.: H04Q 7/00

(54) **MOBILTELEFONANORDNUNG MIT MEHREREN SENDE-EMPFANGS-GERÄTEN**
MOBILE TELEPHONE SYSTEM WITH SEVERAL TRANSCEIVERS
SYSTEME DE TELEPHONES MOBILES A PLUSIEURS RECEPTEURS-EMETTEURS

(30) Priorität: 08.06.1991 DE 4118992
(43) Veröffentlichungstag der Anmeldung: 13.04.1994
(73) Patentinhaber: FRÖHLICH, Rainer W., CH-8038 Zürich (CH)
(72) Erfinder: FRÖHLICH, Rainer W., CH-8038 Zürich (CH); SCHMITT, Peter, D-42119 Wuppertal (DE)
(74) Vertreter: Hunziker, Jean
(86) Internationale Anmeldenummer: EP9201272
(87) Internationale Veröffentlichungsnummer: WO9301688

(56) Entgegenhaltungen:
- US-A- 5 008 925

## Beschreibung

Die Erfindung betrifft eine Mobiltelefonanordnung mit mehreren Sende-Empfangsgeräten nach dem Oberbegriff des patentanspruchs 1.

Mobiltelefonnetze haben sich in den letzten Jahren zu einem wesentlichen Teil der Telekommunikationsdienste entwickelt. Zu den derzeit bestehenden Mobiltelefonnetzen wie z.B. dem C-Netz der Deutschen Bundespost, die überwiegend national organisiert und untereinander inkompatibel sind, sollen künftig untereinander kompatible Netze, bei welchen Teilnehmer sich im Bereich aller Netze ohne Einschränkung der Kommunikationsfähigkeit frei bewegen können (roaming) aufgebaut werden. Im Bereich der Deutschen Bundespost werden diese Netze als sogenannte D-Netze betrieben.

Eine Mobiltelefonanordnung mit zwei Sende-Empfangs-Geräten mit einem gemeinsamen Handapparat ist auch aus der US-A-5008925 bekannt. Der Handapparat kann wahlweise mit einem der Sende-Empfangs-Geräte verbunden werden.

Aufgabe der vorliegenden Erfindung ist es, eine für den Benutzer vorteilhafte und komfortable Mobiltelefonanordnung anzugeben.

Die Erfindung ermöglicht die gleichzeitige Nutzung von mehreren Bedienhandapparaten, die nach Bedarf auf jeweils eines der Sende-Empfangs-Geräte geschaltet werden können. Die Erfindung ist von besonderem Vorteil in einer Ausführung mit separatem Sende-Empfangs-Geräten zu untereinander nicht kompatiblen Mobilfunknetzen, beispielsweise dem C-Netz und den D-Netzen im Bereich der Deutschen Bundespost. Von wesentlicher Bedeutung für eine bedienerfreundliche Nutzung ist, daß jeder Bedienhandapparat mit jedem Sende-Empfangs (S/E)-Gerät verbunden werden kann. Die Auswahl der jeweils richtigen Verbindung zwischen einem Handapparat und einem S/E-Gerät erfolgt vorteilhafterweise über den jeweiligen Handapparat, z.B. durch Tastatureingabe oder vorzugsweise durch eine in den Bedienhandapparat eingesetzte Benutzerkarte, wie sie im C- und D-Netz gebräuchlich ist.

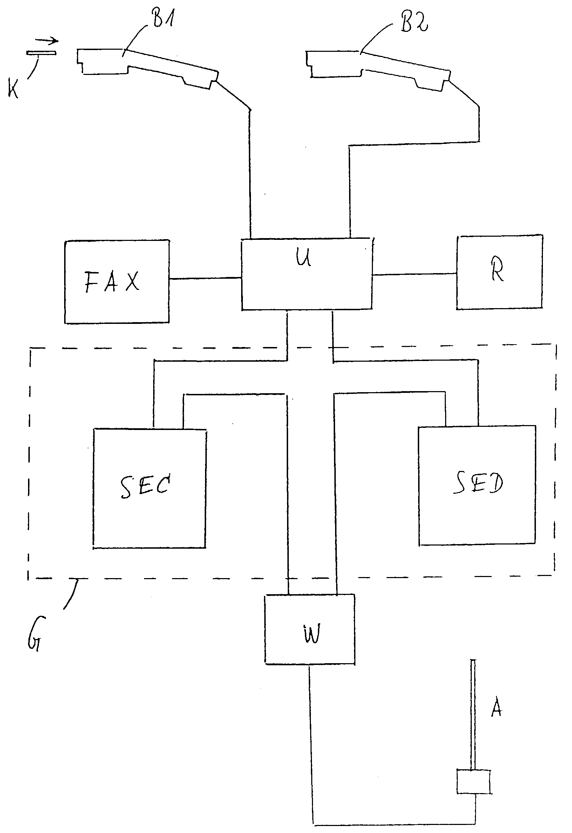

Die Erfindung ist nachfolgend anhand von Ausführungsbeispielen unter Bezugnahme auf die Abbildung noch eingehend erläutert.

Die Sende-Empfangs-Einrichtung enthält im skizzierten Beispiel ein erstes Sende-Empfangs-Gerät SEC für das C-Netz und ein zweites Sende-Empfangs-Gerät SED für ein D-Netz. Die beiden S/E-Geräte sind vorteilhafterweise über eine Antennenweiche W mit einer gemeinsamen Sende-Empfangs-Antenne A verbunden.

Die skizzierte Anordnung enthält weiters zwei Bedienhandapparate B1 und B2, die über eine Umschalteinheit U mit jeweils einem a piori beliebigen der beiden S/E-Geräte SEC oder SED verbindbar sind.

Die Herstellung einer richtigen Verbindung zwischen einem Bedienhandapparat und einem der beiden S/E-Geräte, was im skizzierten Beispielsfall gleichbedeutend ist mit der Entscheidung für einen der beiden Netztypen C oder D, erfolgt vorteilhafterweise über den Bedienhandapparat, beispielsweise durch Tastatureingabe, vorzugsweise aber automatisch über die auf einer Benutzerkarte K lesbar gespeicherte Netzzugangsberechtigung. In gebräuchlicher Weise enthält die Anordnung hierzu Aufnahmen für derartige Benutzerkarten und Kartenleseeinrichtungen (vorzugsweise in die Bedienhandapparate integriert). Bei einem eingehenden Anruf, wodurch bereits eines der S/E-Geräte ausgewählt ist, erfolgt die Verbindung zu einem der Bedienhandapparate automatisch nach einer zuvor vorgenommenen Festlegung der Bedienhandapparate auf ein Netz bzw. eine Nutzer-Rufnummer, vorzugsweise wiederum durch in die Kartenaufnahme eingesetzte Benutzerkarten. Neben einer bestehenden Kommunikationsverbindung über eines der beiden S/E-Geräte kann jederzeit noch eine weitere Kommunikationsverbindung über das andere S/E-Gerät aufgebaut werden. Außerdem kann bei einer aufgebauten Verbindung parallel dazu über das jeweils andere S/E-Gerät zu der von einem Telekopierer FAX (mit ggf. erforderlichen, nicht eingezeichneten Umsetzeinrichtungen) eine Telekopieüberwachung erfolgen oder ein Gesprächsanruf von einem Anrufbeantworter R entgegengenommen werden, die neben den Bedienhandapparat als weitere Endgeräte der Mobiltelefonanordnung an die Umschalteinheit angeschlossen sein können. Die Anzahl der Bedienhandapparate und evtl. weiteren Endgeräte kann von der Anzahl der S/E-Geräte verschieden sein.

Abweichend vom skizzierten Beispiel können auch mehrere S/E-Geräte desselben Netztyps in der Sende-Empfangs-Einrichtung G enthalten sein. Die skizzierte Anordnung erlaubt auch, daß in beide Bedienhandapparate B1 und B2 Benutzerkarten mit Zugangsberechtigung zu demselben Netz mit unterschiedlichen Rufnummern eingesetzt sind, wobei bei einem Anruf an eine der beiden Nummern die Umschalteeinheit den richtigen Handapparat auswählt und die entsprechende Verbindung schaltet.

Vorteilhafterweise wird die Entscheidung über die richtige Verbindung in der Umschalteinheit getroffen, wozu diese neben den Schaltmitteln, z.B. Relais, eine zur Datenverarbeitung geeignete Einrichtung wie z.B. einen Prozessor enthält. Eine andere Ausführung sieht vor, einen in einem der beiden S/E-Geräte vorhandenen Prozessor für die Entscheidung über die richtige Verbindung heranzuziehen und die Umschalteinheit von diesem Sende-Empfangs-Gerät aus zu steuern.

## Patentansprüche

1. Mobiltelefonanordnung mit einer Sende-Empfangs-Einrichtung (G) und einem mit dieser verbundenen Bedienhandapparat (B1) wobei die Sende-Empfangs-Einrichtung mindestens zwei Sende-Empfangs-Geräte (SEC, SED) aufweist, dadurch gekennzeichnet, daß mindestens ein weiterer Bedienhandappart (B2) vorhanden ist und daß eine Umschalteinheit (U) so ausgestaltet ist, daß sie bedarfsweise eine oder mehrere Verbindungen zwischen jeweils einem Bedienhandapparat und einem Sende-Empfangs-Gerät herstellt.

2. Anordnung nach Anspruch 1, dadurch gekennzeichnet, daß die Sende-Empfangs-Geräte (SEC, SED) unterschiedlichen Mobilfunknetzen zugeordnet sind.

3. Anordnung nach Anspruch 1 oder 2, dadurch gekennzeichnet, daß die Verbindung eines Bedienhandapparats (B1, B2) mit einem ausgewählten Sende-Empfangs-Gerät (SEC, SED) nach Maßgabe einer Auswahl-Eingabe am Bedienhandapparat erfolgt.

4. Anordnung nach Anspruch 3, dadurch gekennzeichnet, daß in den Bedienhandapparaten jeweils eine Aufnahme für eine Benutzerkarte (K) und eine Kartenleseeinrichtung vorhanden sind und die Kartenleseeinrichtung aus einer in die Aufnahme eingesetzten Benutzerkarte Daten für die Auswahl-Eingabe ausliest.

5. Anordnung nach einem der vorhergehenden Ansprüche, dadurch gekennzeichnet, daß weitere Telekommunikations-Endgeräte (FAX, R) über die Umschalteinheit (U) mit einem der Sende-Empfangs-Geräte (SEC, SED) verbindbar sind.

6. Anordnung nach einem der vorhergehenden Ansprüche, dadurch gekennzeichnet, daß bei einem ankommenden Anruf die Umschalteinheit (U) automatisch das empfangene Sende-Empfangs-Gerät mit dem der gerufenen Anschlußnummer zugeordneten Bedienhandapparat bzw. Endgerät verbindet.

7. Anordnung nach einem der vorhergehenden Ansprüche, dadurch gekennzeichnet, daß die Sende-Empfangs-Geräte an eine gemeinsame Antenne (A) angeschlossen sind.

## Claims

1. A mobile telephone system having a transmission/reception unit (G) and a hand-held operating device (B1) connected thereto, the transmission/reception unit having at least two transmission/reception devices (SEC, SED), characterized in that at least one further hand-held operating device (B2) is present and wherein a switch-over unit (U) is configured in such a way that, when required, it establishes one or more connection in each case between one hand-held operating device and one transmission/reception device.

2. The system according to claim 1, characterized in that the transmission/reception devices (SEC, SED) are assigned to different mobile radio networks.

3. The system according to claim 1 or 2, characterized in that the connection of a hand-held operating device (B1, B2) to a selected transmission/reception device (SEC, SED) takes place in accordance with a selection input at the hand-held operating device.

4. The system according to claim 3, characterized in that in each case one receptacle for a user card (K) and one card reader device are present in the hand-held operating devices and the card reader device reads out data for the selection input from a user card inserted into the receptacle.

5. The system according to one of the preceding claims, characterized in that further telecommunication terminal devices (FAX, R) can be connected via the switch-over unit (U) to one of the transmission/reception devices (SEC, SED).

6. The system according to one of the preceding claims, characterized in that, when an incoming call occurs, the switch-over unit (U) automatically connects the received transmission/reception device to the hand-held operating device or terminal device assigned to the called connection number.

7. The system according to one of the preceding claims, characterized in that the transmission/reception devices are connected to a common antenna (A).

## Revendications

1. Système de téléphones mobiles comprenant une unité récepteur-émetteur (G) à laquelle est relié et un dispositif de manipulation portatif (B1), l'unité récepteur-émetteur présentant au moins deux appareils récepteur-émetteur (SEC, SED), caractérisé par la présence d'au moins un dispositif de manipulation portatif (B2) supplémentaire, et en ce qu'une unité de commutation (U) est agencée de manière à établir, selon les besoins, une ou plusieurs communications entre un dispositif de manipulation portatif et un appareil récepteur-émetteur.

2. Système selon la revendication 1, caractérisé en ce que les appareils récepteur-émetteur (SEC, SED) sont affectés à différents réseaux-radio mobiles

3. Système selon la revendication 1 ou 2, caractérisé en ce que l'établissement d'une communication entre un dispositif de manipulation portatif (B1, B2) et un appareil récepteur-émetteur (SEC, SED) choisi est effectué selon un input de sélection du dispositif de manipulation portatif.

4. Système selon la revendication 3, caractérisé en ce que les dispositifs de manipulation portatifs présentent chacun un logement pour une carte d'usager (K), et un dispositif de lecture de cartes, et en ce que le dispositif de lecture de cartes choisit les données pour l'input de sélection à partir d'une carte introduite dans ledit logement.

5. Système selon l'une des revendications précédentes, caractérisé en ce que d'autres stations terminales (FAX, R) de télécommunication peuvent être connectées avec l'un des appareils récepteur-émetteur (SEC, SED) par l'intermédiaire de l'unité de commutation (U).

6. Système selon l'une des revendications précédentes, caractérisé en ce que, lors de l'arrivée d'un appel, l'unité de commutation (U) relie automatiquement l'appareil récepteur-émetteur reçu avec le dispositif de manipulation portatif ou la station terminale affecté au numéro du poste appelé.

7. Système selon l'une des revendications précédentes, caractérisé en ce que les appareils récepteur-émetteur sont reliés à une antenne (A) commune.
